# EUROPÄISCHE PATENTSCHRIFT

(11) **EP 3 695 626 B1**
(45) Veröffentlichungstag und Bekanntmachung des Hinweises auf die Patenterteilung: **03.05.2023**
(21) Anmeldenummer: 18778432.7
(22) Anmeldetag: 21.09.2018
(51) Int. Cl.: G06F 16/29, H04L 67/12, G01C 21/32, H04W 4/02, H04W 4/44

(54) **VERFAHREN UND SYSTEM ZUM LADEN VON DIGITALEN GEOGRAPHISCHEN KARTENKACHELN**
METHOD AND SYSTEM FOR LOADING DIGITAL GEOGRAPHICAL MAP TILES
PROCÉDÉ ET SYSTÈME DE CHARGEMENT DE CARRÉS DE CARTES GÉOGRAPHIQUES NUMÉRIQUES

(30) Priorität: 13.10.2017 DE 102017218394
(43) Veröffentlichungstag der Anmeldung: 19.08.2020
(73) Patentinhaber: Robert Bosch GmbH, 70442 Stuttgart (DE)
(72) Erfinder: HOMEIER, Roland, 30974 Wennigsen (DE); KAMPHENKEL, Oliver, 31275 Lehrte (DE)
(86) Internationale Anmeldenummer: PCT/EP2018/075657
(87) Internationale Veröffentlichungsnummer: WO 2019/072526

(56) Entgegenhaltungen:
- DE-U1-202015 009 160
- DE-U1-202015 009 160
- US-A1- 2013 147 820

## Beschreibung

Die Erfindung betrifft ein Verfahren und ein System zum Laden von digitalen geographischen Kartenkacheln durch ein autonomes oder teilautonomes Fahrzeug von einer externen Servereinheit.

### Stand der Technik

Für den autonomen Betrieb von Fahrzeugen mit hoch automatisierten Fahrfunktionen oder mit Fahrassistenzfunktionen, welche auf geografische Daten zugreifen, benötigen die Fahrzeuge geographische Daten der zu fahrenden Strecke. Die digitalen geographischen Daten und ihre Aktualität sind sicherheitsrelevant für den Betrieb der automatisierten Fahrfunktionen oder Fahrassistenzfunktionen. Die Daten werden bei Bedarf dynamisch durch das Fahrzeug von einem Kartenserver angefragt und heruntergeladen, wobei diese geographische Daten bzw. Karten in geografischen Partitionen, wie beispielsweise Kacheln oder Clustern, abgelegt sind.

Derzeit ist der Einsatz von hoch automatisierten Fahrfunktionen oder Fahrassistenzfunktionen nur bis zu einer bestimmten Maximalgeschwindigkeit möglich, die deutlich unter der Höchstgeschwindigkeit eines Fahrzeugs liegt. Sofern das Fahrzeug nicht über hinreichende geographische Daten für eine geplante Fahrstrecke verfügt, die den weiteren Verlauf der Fahrstrecke detailliert beschreiben, muss das Fahrzeug manuell von einem Fahrer gesteuert bzw. übernommen werden. Während das Fahrzeug steht oder manuell gefahren wird, werden die benötigten Kartenkacheln von dem Kartenserver geladen. Sobald ein hinreichendes Gebiet in Form von Kartendaten in den Kartenspeicher des Fahrzeugs geladen ist und das Fahrzeug nicht schneller als die Maximalgeschwindigkeit der automatischen Fahrfunktion oder der Fahrassistenzfunktion fährt, wird dem Fahrer diese Fahrfunktion zum Einschalten freigegeben. Als hinreichendes Gebiet der Kartendaten wird im Stand der Technik eine statische Gebietsgröße vorgegeben, die beispielsweise in einem definierten Radius um die aktuelle Position des Fahrzeuges liegt. Die Kartendaten, die im Kartenspeicher des Fahrzeugs hinterlegt werden, müssen zyklisch auf Aktualität durch entsprechende Kartenserver-Anfragen geprüft werden, bis die Karten-Daten nicht mehr benötigt und verworfen werden können. Während das Fahrzeug in Bewegung ist, werden zyklisch die neu zu ladenden Kartenkacheln berechnet und nachgeladen. Bei sehr hohen Geschwindigkeiten entsteht ein entsprechend hoher Bedarf an neu zu ladenden Kartenkacheln, um den Streckenverlauf darstellen zu können. Allerding wirkt sich die Geschwindigkeit des Fahrzeugs potentiell negativ auf die Verbindungsqualität zum Kartenserver aus. Eine derart unstabile Datenverbindung kann dazu führen, dass ein zuverlässiges Nachladen der Kartenkacheln nicht mehr möglich ist. Bei derzeitigen Systemen wird das Nachladen der Kartenkacheln trotz einer niedrigen Verbindungsqualität weiter ausgeführt, was in einer Überlastung des Datenkanals und zu einem daraus resultierenden Datenverlust führen kann. Alternativ wird von derzeitigen Systemen das Nachladen der Kartendaten eingestellt, da bei hohen Geschwindigkeiten ein automatisiertes Fahren derzeit nicht möglich ist.

In US 2013/0147820 A1 ist ein Verfahren zum Empfangen von Kartendaten beschrieben. Es wird nur ein ausgewählter Teil von Kartendaten empfangen, welcher einer ersten und einer zweiten Route zugeordnet wird. Der Anteil der Kartendaten, welche der ersten Route zugeordnet ist, kann mit einer Priorisierung gegenüber dem Anteil der Kartendaten der zweiten Route empfangen werden. Gemäß einer Ausführungsform werden die Teile von Kartendaten in Abhängigkeit von einer Ansicht bzw. einer Vergrößerungsstufe dargestellt oder vorgeladen. Weiterer Stand der Technik ist aus DE 20 2015 009 160 U1 bekannt.

### Offenbarung der Erfindung

Die der Erfindung zugrunde liegende Aufgabe kann darin gesehen werden, ein Verfahren und ein System vorzuschlagen, das ein Laden von digitalen Kartendaten auch während hohen Geschwindigkeiten eines Fahrzeugs ermöglicht.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird ein Verfahren zum Laden von digitalen geographischen Kartenkacheln durch ein autonomes oder teilautonomes Fahrzeug bereitgestellt. Hierzu wird eine derzeitige Geschwindigkeit des Fahrzeuges ermittelt. Zudem wird eine Verbindungsqualität einer derzeitig für das Fahrzeug verfügbaren Datenverbindung zu einer externen Servereinheit ermittelt. Anschließend wird durch das Fahrzeug eine für eine geplante Fahrstrecke zu ladenden Gebietsgröße in Abhängigkeit von der Geschwindigkeit des Fahrzeuges und der Verbindungsqualität des Fahrzeuges zu der mindestens einen externen Servereinheit berechnet. Es wird eine Auflistung von zu ladenden Kartenkacheln anhand der zu ladenden Gebietsgröße unter Ausschluss von bereits in einer Steuereinheit des Fahrzeugs gespeicherten Kartenkacheln ermittelt. Schließlich wird eine priorisierte Reihenfolge der aufgelisteten zu ladenden Kartenkacheln bestimmt und die Kartenkacheln in der zuvor bestimmten priorisierten Reihenfolge durch das Fahrzeug von einer externen Servereinheit geladen.

Das erfindungsgemäß Verfahren ermöglicht eine Anpassung der anzufordernden geographischen Datenmenge durch das Fahrzeug unter Berücksichtigung der aktuellen Geschwindigkeit und der aktuellen Stabilität der Datenverbindung zwischen dem Fahrzeug und der externen Servereinheit. Bei hohen Geschwindigkeiten kann im manuellen Betrieb des Fahrzeuges mit zunehmender Geschwindigkeit die Parameter, wie beispielsweise ein Radius, des zu ladenden Kartendaten-Gebiets verkleinert werden. Dadurch wird ein zuverlässiges Laden der angeforderten Kartenkacheln ermöglicht und unnötige Anfragen beim Kartenserver werden vermieden. Bei niedrigen Geschwindigkeiten, wie beispielsweise während eines Verkehrsstaus, wird der Radius als Parameter des zu ladenden Kartendaten-Gebiets verkleinert. Bei Geschwindigkeiten des Fahrzeugs unterhalb einer Maximalgeschwindigkeit einer automatischen Fahrfunktion oder einer Fahrassistenzfunktion wird hingegen die Gebietsgröße des in Form von Kartenkacheln zu ladenden Gebiets mit zunehmender Geschwindigkeit maximiert.

Es kann als Kriterium für die Menge der zu ladenden Kartendaten der Zeitfaktor berücksichtigt werden. Unnötige Anfragen auf Aktualität der geladenen Kartendaten werden minimiert, da die Kartendaten erst angefordert werden, wenn das Gebiet für das Fahrzeug bei der aktuellen Geschwindigkeit in einem definierten Zeitrahmen erreichbar ist.

Des Weiteren kann durch das Verfahren eine priorisierte Reihenfolge für das Herunterladen von neu benötigten Kartenkacheln von einer externen Servereinheit festgelegt werden. Dies ermöglicht dem Fahrzeug auch während höherer Geschwindigkeiten und einer niedrigen Übertragungsrate der Datenverbindung weiterhin die Kartenkacheln zu beziehen, die für den Streckenverlauf der geplanten Fahrstrecke des Fahrzeugs beispielsweise am dringendsten benötigt werden. Das Herunterladen von Kartenkacheln, die möglicherweise eine Umgebung der direkten geplanten Fahrstrecke darstellen, kann eine niedrigere Priorisierung zugeordnet und ein Beziehen der Kartendaten dieser Kartenkacheln auf einen Zeitpunkt mit einer stabilen Datenverbindung verschoben werden. Dabei können Werte von Übertragungsraten festgelegt werden, bei denen Kartenkacheln mit einer bestimmten Priorisierung herunter geladen werden. Kartenkacheln mit der Priorisierungsstufe 1 können auch auf Streckenabschnitten mit schwacher Datenverbindung oder bei Fahrten mit hoher Geschwindigkeit weiterhin durch das Fahrzeug von der externen Servereinheit angefordert werden. Kartenkacheln mit der Priorisierungsstufe 3 werden beispielsweise bei im autonomen Fahrbetrieb üblicherweise niedrigeren Geschwindigkeiten und einer hierdurch resultierenden stabileren Datenverbindungen übertragen. Durch den Abgleich mit bereits im Fahrzeugspeicher vorhandenen Kartenkacheln wird verhindert, dass gleiche Kartenkacheln desselben Gebiets mehrfach geladen und im Fahrzeugspeicher hinterlegt werden. Dies kann die angeforderte Datenmenge zusätzlich reduzieren.

Das Verfahren ermöglicht es, für den autonomen Fahrbetrieb eines Fahrzeuges notwendiges Kartenmaterial einer geplanten Fahrstrecke auch während Streckenabschnitten mit einer geringen Funknetzabdeckung oder während Fahrten mit höherer Reisegeschwindigkeit herunterladen zu können. Durch die Minimierung oder Vergrößerung der mit Kartenkacheln zu ladenden Gebietsgröße abhängig von der Qualität der Datenverbindung und der Geschwindigkeit des Fahrzeugs sowie einer Einstufung der jeweiligen Kartenkacheln gemäß ihrer Relevanz für die geplante Fahrstrecke kann eine Reduzierung der zu ladenden Datenmenge realisiert werden. Die durch das Verfahren stark minimierte Datenmenge kann somit auch bei niedrigen Datenübertragungsraten übermittelt werden.

Nach einem Ausführungsbeispiel wird die durch Kartenkacheln dargestellte zu ladende Gebietsgröße dynamisch vergrößert oder verkleinert wird. Hierzu kann die Verbindungsqualität zur Datenübertragung zwischen dem Fahrzeug und der externen Servereinheit kontinuierlich oder in regelmäßigen Abständen ermittelt und die zu ladende Gebietsgröße flexibel angepasst werden. Bei hohen Geschwindigkeiten wird mit zunehmender Geschwindigkeit der Parameter des zu ladenden Kartendatengebiets verkleinert, wodurch weniger Kartenkacheln angefordert werden müssen. Dadurch wird ein zuverlässiges Laden der angeforderten Kartenkacheln möglich und unnötige Anfragen an die externe Servereinheit, die eine Datenübertragung verlangsamen oder das System bei niedrigen Übertragungsraten überlasten könnten, werden vermieden.

Gemäß der vorliegenden Erfindung wird während des manuellen Betriebs des Fahrzeuges mit zunehmender Geschwindigkeit eine zu ladenden Gebietsgröße minimiert. Der autonome bzw. assistierte Fahrbetrieb eines Fahrzeuges ist derzeit nur bis bestimmten Höchstgeschwindigkeit möglich. Zudem weisen Datenverbindungen von Fahrzeugen mit zunehmender Geschwindigkeit eine niedrigere Übertragungsqualität bei der Datenübertragung auf. Ist die Höchstgeschwindigkeit der autonomen Fahrfunktion eines Fahrzeugs erreicht, kann der Fahrer auf den manuellen Betrieb umschalten. Gleichzeitig kann die in Form von Kartenkacheln zu ladende Gebietsgröße reduziert werden um die bei einer höheren Geschwindigkeit zu erwartende Abnahme der Übertragungsrate der Datenverbindung auszugleichen. Ein mögliches Unterbrechen der Übertragung von für den Streckenverlauf relevanten Kartenkacheln kann somit verhindert werden.

Alternativ oder zusätzlich kann bei einer unzureichenden Verbindungsqualität zu der externen Servereinheit zum Beziehen von geografischen Daten die Geschwindigkeit des Fahrzeugs angepasst oder reduziert werden.

Gemäß einer weiteren Ausführungsform wird bei einer mäßigen Geschwindigkeit des Fahrzeuges und einer stabilen Datenverbindung zwischen dem Fahrzeug und der externen Servereinheit die zu ladenden Gebietsgröße maximiert. Bei einer Geschwindigkeit des Fahrzeuges unterhalb der Höchstgeschwindigkeit der autonomen Fahrfunktion oder der Fahrassistenzfunktion ist von einer stabilen Datenübertragung mit einer hohen möglichen Übertragungsrate auszugehen. Vorzugsweise wird somit im manuellen oder autonomen Fahrbetrieb unterhalb der Höchstgeschwindigkeitsgrenze der autonomen Fahrfunktion oder der Fahrassistenzfunktion die zu ladende Gebietsgröße maximiert, um die hohe Übertragungsrate zum Herunterladen möglichst vieler Kartenkacheln auszunutzen. Hierbei werden auch Kartenkacheln mit einer niedrigen Priorisierungsstufe von der externen Servereinheit heruntergeladen. Vorzugsweise wird beim Herunterladen trotz hoher verfügbarer Übertragungsraten die priorisierte Reihenfolge der Kartenkacheln eingehalten. Dies gewährleistet, dass zunächst die für den Streckenverlauf am relevantesten Kartenkacheln geladen werden, sollte es zu einer abrupten Verschlechterung der Übertragungsgeschwindigkeit, beispielsweise durch eine fehlende Funknetzabdeckung, kommen. Hierdurch werden die für die autonome Fahrfunktion oder die Fahrassistenzfunktion unbedingt notwendigen geographischen Daten des geplanten Streckenverlaufs bevorzugt geladen und stehen dem Fahrzeug umgehend zur Verfügung.

Nach einem weiteren Ausführungsbeispiel werden während einer niedrigen Geschwindigkeit des Fahrzeuges nur die Kartenkacheln des Gebietes in der unmittelbaren Umgebung des Fahrzeugs geladen. Bei niedrigen Geschwindigkeiten des Fahrzeuges, wie beispielsweise in einem Stau werden bevorzugterweise die Parameter der durch Kartenkacheln dargestellten zu ladenden Gebietsgröße verkleinert. Hierdurch kann als Kriterium für die Menge der zu ladenden Kartendaten der Zeitfaktor berücksichtigt werden. Wiederholte Anfragen der gleichen Kartenkacheln und unnötiges Überprüfen der Aktualität der geladenen Kartendaten werden somit minimiert, da die Kartendaten erst angefordert werden, wenn das Gebiet für das Fahrzeug bei der aktuellen Geschwindigkeit in einem definierten Zeitrahmen erreichbar ist. Hierdurch kann die übertragene Datenmenge reduziert und das wiederholte herunterladen dergleichen Kartenkacheln vermieden werden. Das System kann somit entlastet und das Speichern unnötiger Daten im Fahrzeugspeicher verhindert werden.

Nach einem weiteren Ausführungsbeispiel werden die zu ladenden Kartenkacheln nach deren Relevanz für eine Fahrstrecke des Fahrzeugs priorisiert. Bevorzugterweise werden den zu ladenden Kartenkacheln eines Gebietes im Umfeld des Fahrzeugs Prioritätsstufen zugeordnet. Kartenkacheln mit der höchsten Prioritätsstufe werden dabei zuerst von der externen Servereinheit geladen. Ist das Herunterladen aller Kartenkacheln mit der höchsten Prioritätsstufe abgeschlossen folgen die Kartenkacheln mit den niedrigeren Prioritätsstufen gemäß ihrer priorisierten Reihenfolge. Die Einordnung der Kartenkacheln in die Prioritätsstufen erfolgt gemäß ihrer Relevanz für die Fahrstrecke des Fahrzeuges vorzugsweise beim Fahren mit der autonomen Fahrfunktion oder der Fahrassistenzfunktion. Beispielsweise können Kartenkacheln, die aufgrund des geplanten Streckenverlaufs von dem Fahrzeug als nächstes durchfahren werden eine hohe Prioritätsstufe zugeordnet bekommen.

Nach einem weiteren Ausführungsbeispiel werden Kartenkacheln die von der geplanten Fahrstrecke des Fahrzeuges durchquert werden, bei der Priorisierung einer Ladereihenfolge bevorzugt. Hierdurch wird gewährleistet, dass zunächst der direkte Streckenverlauf der geplanten Fahrstrecke des Fahrzeugs von der externen Servereinheit heruntergeladen und beispielsweise für die autonome Fahrfunktion bereitgestellt wird. Anschließend können weitere Kartenkacheln mit einer niedrigeren Priorisierung, beispielsweise aus dem Umfeld des direkten Streckenverlaufs, Kartenkacheln von Parkplätzen oder Ausgleichstrecken für den Fall eines Staus heruntergeladen werden. Dies gewährleistet, dass bei einer stabilen Datenverbindung mit der externen Servereinheit zunächst die Kartenkacheln auf dem Fahrzeugspeicher geladen werden, die zum Darstellen der geplanten Fahrstrecke durch das Fahrzeug und insbesondere für die autonome Fahrfunktion oder die Fahrassistenzfunktion unbedingt notwendig sind.

Nach einer weiteren Ausführungsform werden die Kartenkacheln, die über einen längeren Zeitraum des Fahrtverlaufes in einem für das Fahrzeug relevanten Bereich registriert werden, bevorzugt geladen. Kartenkacheln die beispielsweise von Norden nach Süden vollständig durchquert werden haben dabei eine höhere Relevanz für die Fahrstrecke als Kartenkacheln, die von dem Fahrzeug nur in einem kleinen Randbereich durchquert werden. Je länger die auf den Kartenkacheln geplante Fahrstrecke des Fahrzeuges ist, desto relevanter ist sie für den Fahrtverlauf des Fahrzeuges. Relevante Kartenkacheln erhalten daher eine hohe Priorisierungsstufe und werden bevorzugt von der externen Servereinheit heruntergeladen.

Nach einer weiteren Ausführungsform werden während dem manuellen Betrieb des Fahrzeuges geladene Kartenkacheln durch ein Abbremsen und Umschalten in einen autonomen Modus des Fahrzeuges für die autonome Fahrfunktion oder die Fahrassistenzfunktion bereitgestellt. Die heruntergeladen Kartenkacheln werden im Fahrzeugspeicher derart bereitgestellt, dass sie der autonomen Fahrfunktion oder der Fahrassistenzfunktion umgehend zur Verfügung stehen. Durch die priorisierte Ladereihenfolge der Kartenkacheln ist gewährleistet, dass der autonomen Fahrfunktion oder der Fahrassistenzfunktion umgehend die für sie relevantesten Kartenkacheln zu Verfügung stehen. Die Kartenkacheln mit der höchsten Priorität können dabei beispielsweise die nächst gelegenen Kartenkacheln sein, die voraussichtlich als nächstes aufgrund der geplanten Fahrstrecke von Fahrzeug durchquert werden. Eine hohe Priorität können auch Kartenkacheln aufweisen, durch die lange Streckenabschnitte der geplanten Fahrstrecke verlaufen.

Ein weiterer Gegenstand der Erfindung ist ein System zum Bereitstellen von digitalen geographischen Kartenkacheln und zum Durchführen des Verfahrens. Das System weist eine externe Servereinheit und mindestens ein autonomes oder teilautonomes Fahrzeug, welches zum Laden von digitalen geographischen Kartenkacheln von der externen Servereinheit geeignet ist. Des Weiteren weist das System eine Einheit zur Gebietsgrößenregelung, eine Einheit zum Identifizieren von Kartenkacheln und eine Einheit zum Priorisieren von für eine Fahrstrecke eines Fahrzeugs relevanten Kartenkacheln und zum Festlegen einer Reihenfolge zum Laden der priorisierten Kartenkacheln auf.

Die Einheit zur Gebietsgrößenregelung berechnet aus der aktuellen Geschwindigkeit des Fahrzeugs und aus der aktuellen Qualität der Datenverbindung zur externen Servereinheit die Größe des aktuell zu ladenden Gebiets der digitalen geographischen Kartendaten. Dabei wird berücksichtigt, dass mit steigender Geschwindigkeit eines Fahrzeuges die Qualität der Datenverbindung zu einer externen Servereinheit abnimmt. Hierzu kann gemäß der vorliegenden Erfindung bei Geschwindigkeiten unterhalb der Maximalgeschwindigkeit der automatischen Fahrfunktion oder der Fahrassistenzfunktion die Größe des in Form von Kartenkacheln zu ladenden Gebiets mit zunehmender Geschwindigkeit maximiert werden. Wenn die maximale Geschwindigkeit der autonomen Fahrfunktion oder der Fahrassistenzfunktion erreicht ist, bleibt die Größe des zu ladenden Gebiets konstant solange dies möglich ist. Sobald eine Geschwindigkeit des Fahrzeugs erreicht ist, bei der die Anzahl der neu zu ladenden Kartenkacheln so hoch wird, dass diese nicht mehr zuverlässig geladen werden können, wird mit zunehmender Geschwindigkeit die Größe des zu ladenden Gebiets wieder reduziert. Die Einheit zum Identifizieren von Kartenkacheln berechnet aus der Größe des zu ladenden Gebiets und den bereits im Speicher vorhandenen Kartenkacheln eine Liste der neu zu ladenden Kartenkacheln. Die Einheit zum Priorisieren der Kartenkacheln sortiert die Liste der neu zu ladenden Kartenkacheln anhand der bereits bekannten im Kartenspeicher befindlichen geographischen Daten.

Im Folgenden werden anhand von stark vereinfachten schematischen Darstellungen bevorzugte Ausführungsbeispiele der Erfindung näher erläutert. Hierbei zeigen
- Fig. 1: eine Karte mit einer zu ladenden Gebietsgröße am Beispiel eines Kreises gemäß einem erfindungsgemäßen Verfahren,
- Fig. 2: eine Karte zum Verdeutlichen einer Verschiebung der zu ladenden Gebietsgröße an Abhängigkeit von einer Fahrzeugposition und einer Priorisierung von zu ladenden Kartenkacheln am Beispiel von Kartenkacheln,
- Fig. 3: eine Abhängigkeit einer zu ladenden Gebietsgröße von einer Geschwindigkeit eines Fahrzeugs,
- Fig. 4: ein schematisches Ablaufdiagram des Verfahrens gemäß einer Ausführungsform und
- Fig. 5: ein schematisches Ablaufdiagram eines Priorisierungsprozesses von Kartenkacheln.

In den Figuren weisen dieselben konstruktiven Elemente jeweils dieselben Bezugsziffern auf.

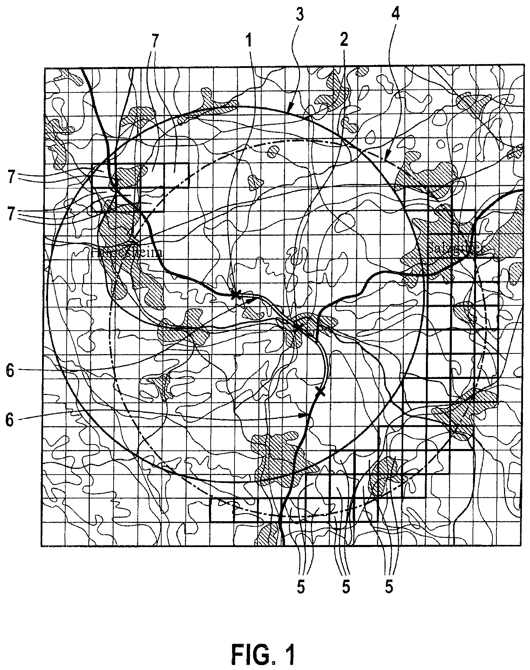

Die Figur 1 zeigt eine Karte mit einer kreisförmigen zu ladenden Gebietsgröße gemäß einem erfindungsgemäßen Verfahren. Ein Fahrzeug legt eine Strecke von einer ersten Position 1 zu einer zweiten Position 2 zurück. Die erste Position 1 bildet dabei den Mittelpunkt eines ersten Radius einer ersten zu ladenden Gebietsgröße 3. die zweite Position bildet den Mittelpunkt eines zweiten Radius einer zweiten zu laden Gebietsgröße 4. Die Gebietsgrößen sind dabei in Kartenkacheln 5 unterteilt. Im Verlauf einer Fahrstrecke 6 verschiebt sich der Mittelpunkt des ersten Radius der ersten zu ladenden Gebietsgröße 3 zum Mittelpunkt des Radius der zweiten zu ladenden Gebietsgröße 4. Bei einem Verschieben des zu ladenden Gebietes in Richtung der zweiten Position 2 müssen neue Kartenkacheln 5 von dem Fahrzeug geladen werden. Die nicht mehr benötigten Kartenkacheln 7 können, sofern sie für den weiteren Streckenverlauf 6 nicht mehr benötigt werden, von einem Fahrzeugspeicher gelöscht werden.

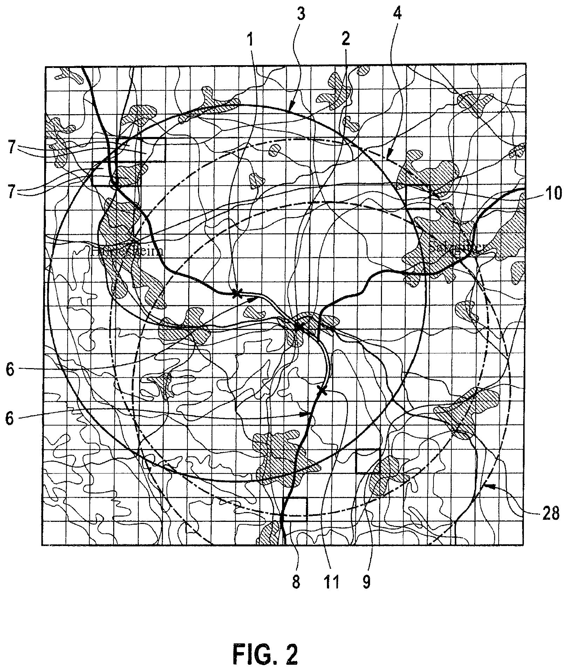

In der Figur 2 ist eine Karte zum Verdeutlichen einer Verschiebung der zu ladenden Gebietsgröße 3, 4 in Abhängigkeit von einer Fahrzeugposition 1, 2, 11 und einer Priorisierung 8, 9, 10 von zu ladenden Kartenkacheln5 dargestellt. Um eine zu übertragende Datenmenge von geographischen Informationen, die beispielsweise für eine autonome Fahrfunktion oder eine Fahrassistenzfunktion eines Fahrzeuges notwendig ist, möglichst gering zu halten, kann den zu laden Kartenkacheln 5 eine Priorisierung 8, 9, 10 bei einer Ladereihenfolge zugeordnet werden. Je nach Relevanz der zu ladenden Kartenkacheln 5 für die Fahrstrecke 6 des Fahrzeuges wird den Kartenkacheln 5 eine hohe oder niedrige Priorität 8, 9, 10 zugeordnet.

Gemäß dem Ausführungsbeispiel verläuft die Fahrstrecke 6 direkt durch die Kartenpartition 8. Der Kartenpartition 8 wird daher eine hohe Prioritätsstufe zugeordnet, so dass die Kartenpartition 8 vorrangig vom Fahrzeug geladen wird. Der Kartenpartition 9 wird eine mittlere Prioritätsstufe zugeordnet, da sie von der direkten Fahrstrecke 6 auf eine Nebenstrecke führt. Die Kartenpartition 10 liegt zwar innerhalb der zu ladenden Gebietsgröße 4, ist jedoch für die weitere Fahrstrecke 6 des Fahrzeugs nur untergeordnet relevant. Der Kartenpartition 10 wird daher eine niedrige Prioritätsstufe zugeordnet.

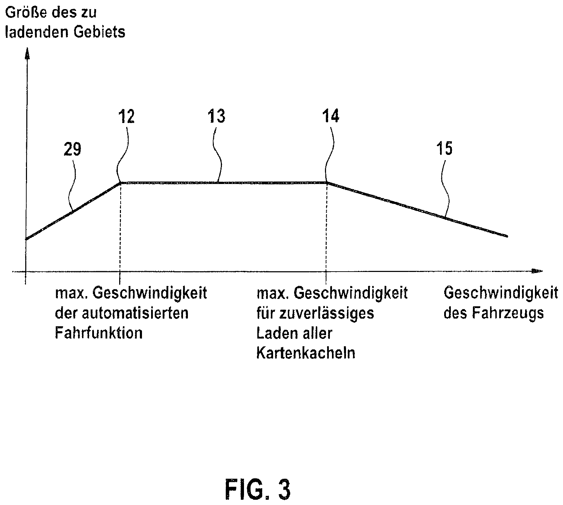

Die Figur 3 zeigt eine Abhängigkeit einer zu ladenden Gebietsgröße 4 von einer Geschwindigkeit eines Fahrzeugs. Bei Geschwindigkeiten unterhalb der Maximalgeschwindigkeit einer autonomen Fahrfunktion 12 oder einer Fahrassistenzfunktion steigt die Größe des zu ladenden Gebiets mit zunehmender Geschwindigkeit an 29. Wenn die maximale Geschwindigkeit der automatischen Fahrfunktion 12 oder der Fahrassistenzfunktion erreicht ist, bleibt die Größe des zu ladenden Gebiets konstant 13 solange ein zuverlässiges Laden neuer Kartenkacheln möglich ist. Sobald eine Geschwindigkeit des Fahrzeugs erreicht ist, bei der die Anzahl der neu zu ladenden Kartenkacheln ein Maß erreicht, bei dem ein zuverlässiges Laden der neuen Kartenkacheln 8, 9, 10 nicht gewährleistet werden kann 14, wird mit zunehmender Geschwindigkeit die zu ladende Gebietsgröße 3, 4, 28 minimiert 15. Wird die Geschwindigkeit auf unterhalb der Maximalgeschwindigkeit der autonomen Fahrfunktion 12 oder der Fahrassistenzfunktion abgebremst, sodass ein zuverlässiges Herunterladen größere Datenmengen gewährleistet ist, kann die zu ladende Gebietsgröße 3, 4, 28 wieder vergrößert 15 werden.

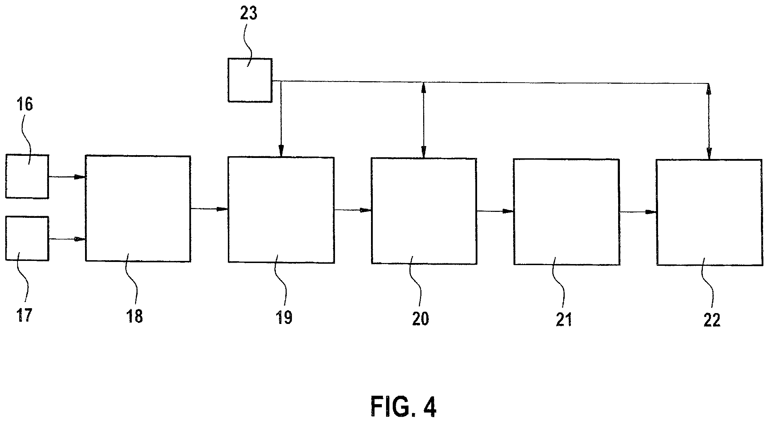

Die Figur 4 zeigt ein schematisches Ablaufdiagram des Verfahrens gemäß einer Ausführungsform. Dabei wird zunächst eine aktuelle Geschwindigkeit des Fahrzeugs 16 und eine aktuelle Qualität der Datenverbindung 17 zu einer externen Servereinheit 25 ermittelt. Unter Berücksichtigung der aktuellen Geschwindigkeit des Fahrzeugs 16 und der aktuelle Qualität der Datenverbindung 17 wird die optimale zu ladende Gebietsgröße des zu ladenden Gebiets 18 ermittelt. Die Ermittlung der optimalen zu ladenden Gebietsgröße 18 kann beispielsweise anhand der Geschwindigkeit ermittelt werden. Anschließend werden aus der Größe der optimalen zu ladenden Gebietsgröße 18 und bereits im Speicher vorhandenen Kartenkacheln 19 eine Liste der neu aus der externen Servereinheit 22 zu ladenden Kartenkacheln 20 erstellt.

Den neu zu ladenden Kartenkacheln 20 wird entsprechen ihrer Relevanz für die Fahrstrecke eine Priorisierung zugewiesen 21. Schließlich werden die neu zu ladenden Kartenkacheln 8, 9, 10 in der priorisierten Reihenfolge 21 von der externen Servereinheit 22 heruntergeladen, so dass im Fall einer Datenverbindung mit niedrigen Übertragungsraten die für die Fahrstrecke relevantesten Kartenkacheln 8 zuerst heruntergeladen werden. Kartenkacheln 9, 10 mit einer niedrigeren zugeordneten Prioritätsstufe werden erst geladen, wenn die Qualität der Datenverbindung steigt und/ oder bereits alle Kartenkacheln mit einer höheren Prioritätsstufe 8 bereits heruntergeladen sind.

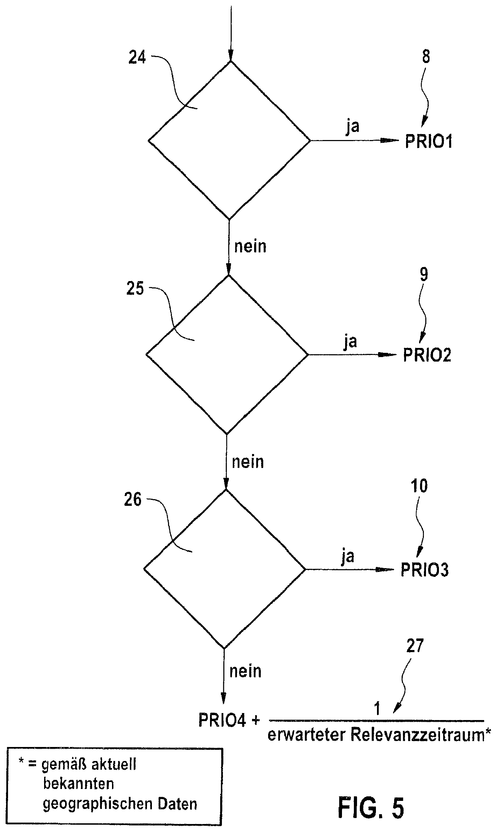

Die Figur 5 zeigt ein schematisches Ablaufdiagram eines Priorisierungsprozesses von Kartenkacheln. Gemäß des Ausführungsbeispiels haben Kartenkacheln, die in die aktuell befahrene und/ oder geplante Fahrstrecke 6 führen 24 die höchste Prioritätsstufe PRIO1 8. Führt eine Fahrstrecke 6 in eine neu zu ladende Kartenpartition in Form einer Kartenkachel, die laut den bekannten geographischen Daten von der aktuellen Fahrstrecke 6 erreichbar ist 25, dann erhält diese Kartenkachel die Priorität PRIO2 9. Die dritthöchste Priorität PRIO3 10 erhalten Kartenkacheln, auf die eine beliebige Fahrstrecke von aktuell bekannten Daten führt 26. Alle weiteren Kartenkacheln erhalten eine Priorität, die sich als PRIO4 + 1/erwarteter Relevanzzeitraum 27 berechnet. Diese Kartenkacheln erhalten eine Reihenfolge, die vom erwarteten Zeitraum ihrer Relevanz für die geographischen Daten abhängt. Dieser Zeitraum kann beispielsweise anhand der bereits bekannten geographischen Daten und der geplanten Weiterfahrt auf der aktuellen Fahrstrecke 6 berechnet werden. Abschließend wird eine Liste der priorisierten neu zu ladenden Kartenkacheln erstellt 22 und die Kartenkacheln in der priorisierten Reihenfolge 21 von der externen Servereinheit 23 heruntergeladen.

## Patentansprüche

1. Verfahren zum Laden von digitalen geographischen Kartenkacheln durch ein autonomes oder teilautonomes Fahrzeug von einer externen Servereinheit (23) aufweisend die Schritte:
- Ermitteln einer derzeitigen Geschwindigkeit des Fahrzeuges (16),
- Ermitteln einer Verbindungsqualität (17) einer derzeitig für das Fahrzeug verfügbaren Datenverbindung zu einer externen Servereinheit (23),
- Berechnen einer durch das Fahrzeug für eine geplante Fahrstrecke (6) zu ladenden Gebietsgröße in Abhängigkeit von der Geschwindigkeit des Fahrzeuges und der Verbindungsqualität des Fahrzeuges zu der mindestens einen externen Servereinheit (18, 23),
- Berechnen einer Auflistung von zu ladenden Kartenkacheln anhand der zu ladenden Gebietsgröße unter Ausschluss von bereits in einer Steuereinheit des Fahrzeugs gespeicherten Kartenkacheln (20),
- Ermitteln einer priorisierten Reihenfolge der aufgelisteten zu ladenden Kartenkacheln (21),
- Laden der Kartenkacheln in priorisierten Reihenfolge,
wobei während eines manuellen Betriebs des Fahrzeuges mit zunehmender Geschwindigkeit eine zu ladende Gebietsgröße minimiert wird (15), wobei bei Geschwindigkeiten des Fahrzeugs unterhalb einer Maximalgeschwindigkeit einer automatischen Fahrfunktion oder einer Fahrassistenzfunktion die Gebietsgröße des in Form von Kartenkacheln zu ladenden Gebiets mit zunehmender Geschwindigkeit maximiert wird.

2. Verfahren nach Anspruch 1, wobei die durch Kartenkacheln dargestellte zu ladende Gebietsgröße dynamisch vergrößert oder verkleinert wird.

3. Verfahren nach einem der Ansprüche 1 oder 2, wobei bei einer mäßigen Geschwindigkeit des Fahrzeuges und einer stabilen Datenverbindung zwischen dem Fahrzeug und der externen Servereinheit (23) die zu ladenden Gebietsgröße maximiert wird.

4. Verfahren nach einem der Ansprüche 1 bis 3, wobei während einer niedrigen Geschwindigkeit des Fahrzeuges nur die Kartenkacheln des Gebietes in unmittelbaren Umgebung des Fahrzeugs geladen werden

5. Verfahren nach einem der Ansprüche 1 bis 3, wobei die zu ladenden Kartenkacheln nach deren Relevanz für eine Fahrstrecke (6) des Fahrzeugs priorisiert werden.

6. Verfahren nach Anspruch 5, wobei Kartenkacheln die von der geplanten Fahrstrecke (6) des Fahrzeuges durchquert werden, bei der Priorisierung (21) einer Ladereihenfolge bevorzugt werden.

7. Verfahren nach Anspruch 5 oder 6, wobei Kartenkacheln, die über einen längeren Zeitraum des Fahrverlaufes in einem für das Fahrzeug relevanten Bereich registriert werden, bevorzugt geladen werden (24).

8. Verfahren nach einem der Ansprüche 1 bis 4, wobei während dem manuellen Betrieb des Fahrzeuges geladene Kartenkacheln durch ein Abbremsen und Umschalten in einen autonomen Modus dem Fahrzeug für das autonome Fahren bereitgestellt werden.

9. System zum Bereitstellen von digitalen geographischen Kartenkacheln und zum Durchführen des Verfahrens nach einem der Ansprüche 1 bis 8, aufweisend mindestens eine externe Servereinheit (23) und mindestens ein autonomes oder teilautonomes Fahrzeug geeignet zum Laden von digitalen geographischen Kartenkacheln von der externen Servereinheit (23), aufweisend eine Einheit zur Gebietsgrößenregelung, eine Einheit zum Identifizieren von Kartenkacheln und eine Einheit zum Priorisieren von für eine Fahrstrecke (6) eines Fahrzeugs relevanten Kartenkacheln und zum Festlegen einer Reihenfolge zum Laden der priorisierten Kartenkacheln.

## Claims

1. Method for loading digital geographical map tiles by way of an autonomous or semiautonomous vehicle from an external server unit (23), having the steps of:
- determining a current speed of the vehicle (16),
- determining a connection quality (17) of a data connection currently available for the vehicle to an external server unit (23),
- calculating a size of area to be loaded by the vehicle for a planned route (6) on the basis of the speed of the vehicle and the connection quality of the vehicle to the at least one external server unit (18, 23),
- calculating a list of map tiles to be loaded on the basis of the size of area to be loaded by excluding map tiles (20) that are already stored in a control unit of the vehicle,
- determining a prioritized order for the listed map tiles (21) that are to be loaded,
- loading the map tiles in prioritized order,
wherein during manual operation of the vehicle a size of area to be loaded is minimized (15) as speed increases, the size of area of the area to be loaded in the form of map tiles being maximized as speed increases at speeds of the vehicle below a maximum speed of an automatic driving function or a driving assistance function.

2. Method according to Claim 1, wherein the size of area to be loaded that is represented by map tiles is dynamically increased or reduced.

3. Method according to either of Claims 1 and 2, wherein the size of area to be loaded is maximized if the speed of the vehicle is moderate and there is a stable data connection between the vehicle and the external server unit (23).

4. Method according to one of Claims 1 to 3, wherein only the map tiles of the area in the immediate surroundings of the vehicle are loaded when the speed of the vehicle is low.

5. Method according to one of Claims 1 to 3, wherein the map tiles to be loaded are prioritized according to the relevance of said map tiles to a route (6) of the vehicle.

6. Method according to Claim 5, wherein map tiles that are crossed by the planned route (6) of the vehicle are preferred when a loading order is prioritized (21).

7. Method according to Claim 5 or 6, wherein map tiles that are registered over a longer period of the course of travel in a region that is relevant to the vehicle are loaded as a preference (24).

8. Method according to one of Claims 1 to 4, wherein map tiles that are loaded during manual operation of the vehicle are provided to the vehicle for autonomous driving as a result of slowing and changeover to an autonomous mode.

9. System for providing digital geographical map tiles and for carrying out the method according to one of Claims 1 to 8, comprising at least one external server unit (23) and at least one autonomous or semiautonomous vehicle suitable for loading digital geographical map tiles from the external server unit (23), comprising a unit for controlling size of area, a unit for identifying map tiles and a unit for prioritizing map tiles that are relevant to a route (6) of a vehicle and for stipulating an order for loading the prioritized map tiles.

## Revendications

1. Procédé permettant de charger des carrés de carte géographique numérique par un véhicule autonome ou semi-autonome à partir d'une unité de serveur externe (23), présentant les étapes consistant à :
- déterminer une vitesse actuelle du véhicule (16),
- déterminer une qualité de liaison (17) d'une liaison de données actuellement disponible pour le véhicule avec une unité de serveur externe (23),
- calculer une zone cartographique à charger par le véhicule pour un itinéraire prévu (6) en fonction de la vitesse du véhicule et de la qualité de liaison du véhicule avec ladite au moins une unité de serveur externe (18, 23),
- calculer une liste de carrés de carte à charger à l'aide de la zone cartographique à charger en excluant des carrés de carte (20) déjà stockés dans une unité de commande du véhicule,
- déterminer un ordre de priorité des carrés de carte à charger (21) listés,
- charger les carrés de carte par ordre de priorité,
dans lequel, pendant un fonctionnement manuel du véhicule à vitesse croissante, une zone cartographique à charger est minimisée (15), dans lequel, à des vitesses du véhicule inférieures à une vitesse maximale d'une fonction de conduite automatique ou d'une fonction d'assistance à la conduite, la zone cartographique de la zone à charger sous forme de carrés de carte est maximisée avec une vitesse croissante.

2. Procédé selon la revendication 1, dans lequel la zone cartographique à charger, représentée par des carrés de carte, est agrandie ou réduite de manière dynamique.

3. Procédé selon l'une quelconque des revendications 1 ou 2, dans lequel la zone cartographique à charger est maximisée à une vitesse modérée du véhicule et avec une liaison de données stable entre le véhicule et l'unité de serveur externe (23).

4. Procédé selon l'une quelconque des revendications 1 à 3, dans lequel, pendant une vitesse réduite du véhicule, seuls les carrés de carte de la zone dans l'environnement immédiat du véhicule sont chargés.

5. Procédé selon l'une quelconque des revendications 1 à 3, dans lequel la priorité des carrés de carte à charger est établie selon leur pertinence pour un itinéraire (6) du véhicule.

6. Procédé selon la revendication 5, dans lequel des carrés de carte qui sont traversés par l'itinéraire prévu (6) du véhicule sont préférés lors de l'établissement de la priorité (21) d'un ordre de chargement.

7. Procédé selon la revendication 5 ou 6, dans lequel des carrés de carte qui sont enregistrés pendant une période de temps plus longue au cours d'un déplacement dans une zone pertinente pour le véhicule sont chargés de préférence (24)

8. Procédé selon l'une quelconque des revendications 1 à 4, dans lequel des carrés de carte chargés pendant le fonctionnement manuel du véhicule sont fournis au véhicule pour la conduite autonome par un freinage et une commutation sur un mode autonome.

9. Système permettant de fournir des carrés de carte géographique numérique et d'exécuter le procédé selon l'une quelconque des revendications 1 à 8, présentant au moins une unité de serveur externe (23) et au moins un véhicule autonome ou semi-autonome qui est adapté pour charger des carrés de carte géographique numérique à partir de l'unité de serveur externe (23), présentant une unité de régulation de zone cartographique, une unité d'identification de carrés de carte et une unité permettant d'établir la priorité des carrés de carte pertinents pour un itinéraire (6) d'un véhicule et de définir un ordre de chargement des carrés de carte priorisés.
